# EUROPÄISCHE PATENTSCHRIFT

(11) **EP 2 681 037 B1**
(45) Veröffentlichungstag und Bekanntmachung des Hinweises auf die Patenterteilung: **03.12.2014**
(21) Anmeldenummer: 12709497.7
(22) Anmeldetag: 01.03.2012
(51) Int. Cl.: B29C 70/44, B29C 70/02

(54) **VERFAHREN ZUR HERSTELLUNG EINES FASERVERBUNDBAUTEILS**
METHOD FOR PRODUCING A FIBRE COMPOSITE COMPONENT
PROCÉDÉ DE PRODUCTION D'UNE PIÈCE STRUCTURALE EN COMPOSITE FIBREUX

(30) Priorität: 04.03.2011 AT 2952011
(43) Veröffentlichungstag der Anmeldung: 08.01.2014
(73) Patentinhaber: FACC AG, 4910 Ried im Innkreis (AT)
(72) Erfinder: SCHNEIDERBAUER, Gernot, A-4770 Andorf (AT); KOCH, Olaf, A-4563 Micheldorf in Oberösterreich (AT)
(74) Vertreter: Sonn & Partner Patentanwälte
(86) Internationale Anmeldenummer: PCT/AT2012/000047
(87) Internationale Veröffentlichungsnummer: WO 2012/119163

(56) Entgegenhaltungen:
- EP-A1- 2 119 544
- WO-A2-2009/060347
- DE-A1- 3 739 753
- US-A- 4 942 013
- US-A1- 2008 211 145

## Beschreibung

Die Erfindung betrifft ein Verfahren gemäß dem Oberbegriff von Anspruch 1.

Im Stand der Technik sind verschiedenste Infusionsverfahren zur Herstellung von Faserverbundbauteilen bekannt, wobei ein trockenes Fasermaterial mit einem Matrixwerkstoff durchtränkt wird, das durch Anlegen eines Vakuums an einen abgedichteten Raum angesaugt wird. Das Fasermaterial, welches eine Vorform bzw. ein Halbzeug des fertigen Verbundbauteils darstellt, kann je nach Ausführung durch ein Multiaxialgelege, ein Gewebe oder durch unidirektionale Lagen gebildet sein. Diese Vorform wird auf einem Werkzeug angeordnet, welches die zugewandte Bauteilseite des Faserverbundbauteils definiert. Auf der gegenüberliegenden Seite des Verbundbauteils wird ein Vakuumaufbau angeordnet, der je nach Ausführung unterschiedliche Folien, Abreißgewebe und Membrane aufweist.

Aus der EP 1 181 149 B1 ist ein Injektionsverfahren zur Herstellung eines faserverstärkten Kunststoff-Bauteils aus einem trockenen Faserverbund-Halbzeug bekannt, das auf einem Werkzeug angeordnet wird. Das Faserverbundbauteil wird zur Ausbildung eines Infusionsraums mit einer semipermeablen Membran überzogen, die gasdurchlässig ist, jedoch den Durchtritt von Matrix-Material verhindert. Zudem kann ein Abreißgewebe und eine Fließhilfe angeordnet werden. Diese Anordnung wird mit einer gasundurchlässigen Folie überdeckt, welche mittels einer Dichtung auf dem Werkzeug abgedichtet ist, so dass ein zweiter Raum ausgebildet wird, der mit einer Vakuumleitung verbunden wird. Somit werden zwei getrennte Räume dazu verwendet, eine flächendeckende Entlüftung des Fasergeleges zu gewährleisten und den Eintritt von Matrixmaterial in die Vakuumleitung zu verhindern.

Aus der EP 2 119 544 A1 und WO 2009/060347 A1 sind Verfahren zur Herstellung von Verbundbauteilen mit den Merkmalen des Oberbegriffs von Anspruch 1 bekannt, bei welchen der Faserverbundwerkstoff im Bereich des Formwerkzeugs mit einem Folienaufbau versehen wird, um die Zu- bzw. Ableitung des Matrix-Materials zu kontrollieren.

In der US 5,601,852 ist ein weiteres Infusionsverfahren beschrieben, bei welchem das Verbundbauteil auf einem festen Träger hergestellt wird, welcher mit einem speziellen, einzelne Zuleitungskanäle ausbildenden Vakuumsack abgedichtet wird.

Die bekannten Verfahren sind grundsätzlich sehr gut dazu geeignet, qualitativ hochwertige Faserverbundbauteile herzustellen, stoßen jedoch an ihre Grenzen, wenn großflächige Strukturen mit Verstärkungsprofilen versehen werden sollen. In diesem Fall sind bei den bekannten Verfahren komplexe und aufwendige Vakuumaufbauten und Folien- bzw. Membran-Anordnungen erforderlich. Dabei besteht insbesondere die Gefahr, dass es zu lokalen Undichtigkeiten, zum Reißen der Folien oder zum vorzeitigen Füllen der Vakuumleitungen mit Matrixwerkstoff kommt. Diese Problematik wird zusätzlich erschwert, wenn enge Toleranzen für die Geometrie der Profile (Lage, Position, Dicke, Höhe etc.) vorgegeben werden.

Demzufolge besteht die Aufgabe der vorliegenden Erfindung darin, ein Verfahren der eingangs angeführten Art zu schaffen, welches hinsichtlich der vorstehend erläuterten Probleme verbessert ist. Demnach soll insbesondere ein einfach umzusetzendes Verfahren zur Verfügung gestellt werden, welches zur Herstellung von Faserverbundbauteilen mit Verstärkungsprofilen, selbst in größerer Anzahl und mit kompliziertem Verlauf, gut geeignet ist. Zudem soll eine konstruktiv einfache Werkzeuganordnung zur Verwendung in einem solchen Verfahren geschaffen werden.

Diese Aufgabe wird durch ein Verfahren wie in Anspruch 1 angegeben gelöst.

Demnach werden beim Anlegen eines Unterdrucks an den abgedichteten Raum Luft und Harz zwischen den Werkzeugteilen des Formwerkzeugs durch das Versteifungsprofil gesaugt. Nach Durchtränkung des Versteifungsprofils wird der durchgetretene Luft- bzw. Harzstrom in den Absaugkanal im Formwerkzeug geleitet, welcher an die zentrale Ausnehmung des Formwerkzeugs anschließt. Der Absaugkanal, welcher zweckmäßigerweise als integrale Aussparung des Formwerkzeugs ausgebildet ist, weist einen gegenüber der zentralen Ausnehmung des Formwerkzeugs vergleichsweise kleinen Querschnitt auf, wobei der eingeleitete Luft- bzw. Harzstrom zur Absaugöffnung des Formwerkzeugs gelangt, welche an die Vakuumeinrichtung angeschlossen ist. Hierdurch wird auf vorteilhafte Weise gewährleistet, dass Luft und Harz erst nach vollständiger Durchdringung der Vorform, welche sich aus dem Fasergelege und dem Versteifungsprofil zusammensetzt, in die Vakuumleitung gelangen kann. Dies ermöglicht es insbesondere, dass die Vorform zumindest einen von einer semipermeablen, d.h. luftdurchlässigen aber harzundurchlässigen, Membran freien Abschnitt, vorzugsweise im Bereich des zumindest einen Versteifungsprofils, aufweisen kann. Somit können die beim Stand der Technik auftretenden Probleme, speziell die komplizierte und fehleranfällige Anordnung der semipermeablen Membran im Bereich der Versteifungselemente sowie ein unerwünschtes Eindringen von Harz in die Vakuumleitung vor vollständiger Durchdringung der Vorform, zuverlässig vermieden werden. Somit können qualitativ hochwertige Faserverbundbauteile für verschiedenartige Anordnungen und Ausgestaltungen der Versteifungsprofile hergestellt werden. Zudem kann vorteilhafterweise die Ausschussware beträchtlich verringert werden.

Um einen Eintritt von Harz in die Vakuumleitung zu verhindern, weist die Vakuumleitung ein im trockenen Zustand luftdurchlässiges und harzundurchlässiges Membranfilter auf, welches dazu eingerichtet ist, bei einer Durchtränkung mit Harz in einen im Wesentlichen luftdichten Zustand überzugehen. Nach vollständiger Durchtränkung des Faser-Halbzeugs gelangt das Harz über den Absaugkanal in die Vakuumleitung, welche das Membranfilter aufweist. Bei vollständiger Benetzung mit Harz schließt das Membranfilter, wodurch die Luftabsaugung unterbrochen wird. Somit wird eine selbstregulierende Luftabsaugung erzielt. Vorzugsweise weist die Vakuumleitung bzw. die daran angeschlossene Vakuumeinrichtung Detektionsmittel auf, welche dazu eingerichtet sind, eine Druckveränderung in der Vakuumleitung zu detektieren. Wenn das Membranfilter bei Durchtränkung mit Harz in den luftundurchlässigen Zustand übergeht, wird hierdurch ein Druckanstieg in der Vakuumleitung hervorgerufen, der mit den Detektionsmitteln detektiert werden kann, um die vollständige Durchtränkung des Faser-Halbzeugs festzustellen. Diese Anordnung des Membranfilters in der Vakuumleitung ist insbesondere dann von Vorteil, wenn das Verfahren in einem abgeschlossenen Raum durchgeführt wird, so dass der Fortschritt in der Herstellung des Faserverbundbauteils nicht direkt beobachtet werden kann. Derartige semipermeable Membrane bzw. Membranfilter sind im Stand der Technik aus einem anderen Zusammenhang bekannt. Bei einer vorzugten Ausführung des Membranfilters, welche aus der Sportbekleidung bekannt ist, ist eine dünne Silikon-Haut vorgesehen, welche im Herstellungsprozess derart überdehnt wird, dass feine Poren erzeugt werden, die für Luft durchlässig, jedoch für eine Flüssigkeit, im vorliegenden Fall Harz, undurchlässig sind. Im Kontakt mit Harz werden die Poren allmählich verschlossen, so dass die Membran in den luftdichten Zustand übergeht. Die Silikon-Haut kann mit einer Tragschicht in Form eines Gewebes verbunden sein.

Um eine vollständige Durchtränkung des Versteifungsprofils in vergleichsweise kurzen Zeitintervallen zu gewährleisten, ist es günstig, wenn die Absaugung von Harz und Luft über die Absaugöffnung an der von der Tragform abgewandten Oberseite des Formwerkzeugs erfolgt. Demnach weist das Formwerkzeug an seiner Oberseite eine insbesondere als Aussparung des Formwerkzeugs gebildete Absaugöffnung auf, so dass Luft und Harz nach dem Durchtritt durch das Versteifungsprofil über den Absaugkanal an die Außenseite des Formwerkzeugs gelangt. Die Absaugöffnung wird in geeigneter Weise mit der Vakuumleitung verbunden, um den Saugdruck im Inneren des Formwerkzeugs aufrechtzuerhalten.

Zur Entlüftung des Versteifungsprofils ist es von Vorteil, wenn im Absaugkanal Luft und Harz zumindest abschnittsweise im Wesentlichen senkrecht zur Längsebene des Fasergeleges abgesaugt werden. Hierdurch kann Harz und Luft effizient vom Fasergelege durch das Versteifungsprofil in den Absaugkanal angesaugt und über den zumindest abschnittsweise senkrecht zur Längsebene des Fasergeleges verlaufenden Absaugkanal zur außenseitigen Absaugöffnung des Formwerkzeugs transportiert werden, an welcher mittels der Vakuumleitung ein Unterdruck angelegt wird.

Um die Entlüftung des Faser-Halbzeugs zu unterstützen, ist es günstig, wenn eine weitere Vakuumleitung, insbesondere in einem Randbereich des Fasergeleges, angeordnet wird. Die Anzahl der verwendeten Vakuumleitungen richtet sich vorrangig nach den Abmessungen des Faserverbundbauteils sowie nach Anzahl und Beschaffenheit der Versteifungsprofile.

Im Hinblick auf eine einfach zu installierende, teilesparende Anordnung zur Herstellung des Faserverbundbauteils ist es von Vorteil, wenn die im Randbereich des Fasergeleges angeordnete weitere Vakuumleitung mit der an den Absaugkanal im Formwerkzeug angeschlossenen Vakuumleitung in einer gemeinsamen Hauptleitung zusammengeführt wird. Demnach erfolgt die Absaugung an zumindest zwei Stellen des Faser-Halbzeugs, wobei die Vakuumleitungen mit der gemeinsamen Hauptleitung verbunden sind, welche zum Erzeugen des Unterdrucks an die Vakuumeinrichtung angeschlossen wird.

Zweckmäßigerweise ist in einem vom Formwerkzeug freien Bereich, insbesondere in einem Randbereich des Faserverbundbauteils, ein Membran- bzw. Gewebeaufbau angeordnet, der eine Verteilermembran und/oder ein Abreißgewebe aufweist. Ein derartiger Membran- bzw. Gewebeaufbau ist im Stand der Technik grundsätzlich bekannt. Die Absaugung von Luft und Harz am Formwerkzeug ermöglicht es jedoch, auf eine semipermeable Membran zur Trennung eines Infusionsraums von einem Entlüftungsraum zu verzichten oder eine solche semipermeable Membran ausschließlich im Randbereich des Faserverbundbauteils einzusetzen, wogegen die übrigen Bereiche des Faserverbundbauteils von der semipermeablen Membran frei sein können.

Zur Ausbildung eines luftdicht abgeschlossenen Infusionsraumes im Inneren der luftdichten Folie ist es günstig, wenn die Verteilermembran im Randbereich des Fasergeleges gegenüber der Tragform abgedichtet wird.

Zur Durchführung des Verfahrens ist zweckmäßigerweise vorgesehen, dass das Ansaugen von Harz in einem Ofen unter Wärmezufuhr durchgeführt wird. Wenn das Verfahren im Ofen durchgeführt ist, kann nicht ohne weiteres festgestellt werden, ob die Durchtränkung des Fasergeleges abgeschlossen ist. Wie vorstehend beschrieben, ist es daher von besonderem Vorteil, wenn in der Vakuumleitung ein semipermeables Membranfilter angeordnet ist, welches im Kontakt mit Harz in einen geschlossenen, luftdichten Zustand übergeht. Somit wird die Luftabsaugung nach vollständiger Durchtränkung des Fasergeleges bzw. des Versteifungsprofils automatisch unterbrochen, sobald das Harz zum Membranfilter in der Vakuumleitung gelangt.

Das erfindungsgemäße Verfahren kann mit einer Werkzeuganordnung mit einer Tragform zur Aufnahme eines flächigen Fasergeleges, und einem Formwerkzeug mit entsprechenden Werkzeugteilen, welche im geschlossenen Zustand eine Ausnehmung zur Aufnahme eines Versteifungsprofils für das Fasergelege einschließen, durchgeführt werden, bei welcher das Formwerkzeug einen mit der Ausnehmung zur Aufnahme des Versteifungsprofils verbundenen Absaugkanal aufweist, der über eine am Formwerkzeug ausgebildete Absaugöffnung mit einer Vakuumleitung zum Absaugen von Luft verbindbar ist. Im Stand der Technik sind Formwerkzeuge zur Verwendung in einem Infusionsverfahren in verschiedensten Ausführungen bekannt. Das Formwerkzeug weist zumindest zwei zusammenarbeitende Werkzeugteile auf, die eine zentrale Ausnehmung zum Verpressen eines darin aufgenommenen, entsprechend geformten Versteifungsprofils einschließen. Das Formwerkzeug weist zudem zumindest einen Absaugkanal auf, der als Aussparung zumindest eines Werkzeugteils des Formwerkzeugs ausgebildet ist. Der Absaugkanal verbindet die Ausnehmung für das Versteifungsprofil mit der Absaugöffnung, welche an die Vakuumeinrichtung angeschlossenen werden kann. Die hiermit erzielbaren Effekte bzw. Vorteile entsprechen im Wesentlichen jenen beim vorstehend erläuterten Verfahren, so dass zwecks Vermeidung von Wiederholungen auf diese Ausführungen verwiesen werden kann.

Um die Absaugung von Luft und Harz durch das Formwerkzeug zu verbessern, ist bevorzugt vorgesehen, dass die Absaugöffnung als Aussparung des Formwerkzeugs an der von der Tragform abgewandten Oberseite des Formwerkzeugs ausgebildet ist. In der Betriebsstellung des Formwerkzeugs ist die Längsachse des Absaugkanals vorzugsweise im Wesentlichen senkrecht zur Längsebene der Tragform angeordnet.

Gemäß einer bevorzugten Ausführungsform weist das Formwerkzeug im geschlossenen Zustand eine im Querschnitt im Wesentlichen rechteckige Ausnehmung zum Verpressen eines stegförmigen Teils des Versteifungsprofils auf. Zur Ausbildung eines Stringerelements kann insbesondere ein T-förmiges Versteifungsprofil vorgesehen sein, welches beispielsweise bei einem Flugzeugflügel eine großflächige, aus dem flächigen Fasergelege erzeugte Flügelstruktur verstärkt.

Selbstverständlich können jedoch auch andere, im Stand der Technik für sich genommen bekannte Ausgestaltungen des Formwerkzeugs vorgesehen sein, um entsprechende Versteifungsprofile vorzusehen. Demnach ist bei einer alternativen bevorzugten Ausführungsform vorgesehen, dass das Formwerkzeug im geschlossenen Zustand eine im Querschnitt im Wesentlichen L-förmige Ausnehmung zum Verpressen eines entsprechend geformten Teils des Versteifungsprofils aufweist. Hierdurch kann insbesondere ein sogenanntes LZ-Versteifungsprofil hergestellt werden.

Bei einer bevorzugten Ausführungsform ist vorgesehen, dass zumindest zwei Formwerkzeuge zum Verpressen jeweils eines Versteifungsprofils vorgesehen sind, zwischen denen zumindest ein Distanzblock angeordnet ist, der einen mit der Harz-Zuleitung verbindbaren Harzzufuhrkanal aufweist. Das Distanzstück ist einerseits dazu eingerichet, benachbarte Formwerkzeuge in der bestimmungsgemäßen Position zu fixieren; zudem kann die Harz-Zuführung durch die Distanzstücke erfolgen, wobei das Harz über den Harzzufuhrkanal im Bereich des Fasergeleges in den abgedichteten Raum eingeleitet wird.

Zur Harz-Zuführung ist es günstig, wenn der Harzzufuhrkanal des Distanzblocks einen im Wesentlichen senkrecht zur Längsebene des Fasergeleges verlaufenden Abschnitt, der mit der Harz-Zuleitung verbindbar ist, und einen im Wesentlichen parallel zur Längsebene des Fasergeleges verlaufenden Abschnitt zum Einleiten von Harz aufweist. Die Einleitung von Harz erfolgt somit tangential bzw. parallel zur Längsebene des Fasergeleges, wodurch eine zweckmäßige Durchtränkung des Fasergeleges erzielt werden kann.

Die Erfindung wird nachstehend anhand von in den Figuren dargestellten Ausführungsbeispielen, auf die sie jedoch nicht beschränkt sein soll, noch weiter erläutert. Im Einzelnen zeigen in der Zeichnung:
Fig. 1 eine schematische Schnittansicht durch einen Aufbau zur Herstellung eines Faserverbundbauteils im Infusionsverfahren gemäß einer Ausführungsform der Erfindung, wobei ein Luft- bzw. Harzstrom durch ein T-förmiges Versteifungsprofil in einem Formwerkzeug gesaugt wird, das einen mit zumindest einer Vakuumleitung verbundenen Absaugkanal aufweist;
Fig. 2 eine Fig. 1 entsprechende Schnittansicht eines Aufbaus zur Herstellung eines Faserverbundbauteils, wobei gemäß einer weiteren Ausführungsform der Erfindung ein LZ-Versteifungsprofil vorgesehen wird;
Fig. 3 eine schematische Schnittansicht durch einen erfindungsgemäßen Aufbau zur Herstellung eines Faserverbundbauteils, wobei in einem Randbereich des Faserverbundbauteils eine luftdurchlässige und harzundurchlässige Membran angeordnet wird;
Fig. 4 schematisch einen Schnitt durch die Werkzeuganordnung im Bereich des Absaugkanals, wobei auf eine die Absaugöffnung des Absaugkanals aufweisende Oberseite des Formwerkzeugs ein Anschlussteil aufgesetzt ist, an welchem die Vakuumleitung angeschlossen wird;
Fig. 5a und Fig. 5b jeweils eine schematische Ansicht der Vakuumleitung, welche ein im trockenen Zustand (vgl. Fig. 5a) luftdurchlässiges und harzundurchlässiges Membranfilter aufweist, welches bei Durchtränkung mit Harz in einen im Wesentlichen luftdichten Zustand (vgl. Fig. 5b) übergeht;
Fig. 6 eine schaubildliche, im Bereich eines Absaugkanals eines Formwerkzeugs geschnittene Ansicht der Werkzeuganordnung mit darin aufgenommenem Faserverbundbauteil, wobei benachbarte Formwerkzeuge durch Distanzblöcke beabstandet sind, die einen mit der Harz-Zuleitung verbindbaren Harzzufuhrkanal aufweisen;
Fig. 7 das in Fig. 6 mit einem Kreis eingerahmte Detail A in demgegenüber vergrößertem Maßstab;
Fig. 8 eine schaubildliche Ansicht der Werkzeuganordnung entsprechend Fig. 6 mit einem Schnitt im Bereich des Harzzufuhrkanals eines Distanzblocks;
Fig. 9 das in Fig. 8 mit einem Kreis eingerahmte Detail B in demgegenüber vergrößertem Maßstab;
Fig. 10 eine Draufsicht auf die Werkzeuganordnung gemäß den Fig. 6 bis 9;
Fig. 11 eine Aufrissansicht der Werkzeuganordnung gemäß den Fig. 6 bis Fig. 10; und
Fig. 12 ein schematisches Diagramm des Temperaturverlaufs (oben) bzw. des Druckverlaufs (unten) während der Herstellung des Faserverbundbauteils.

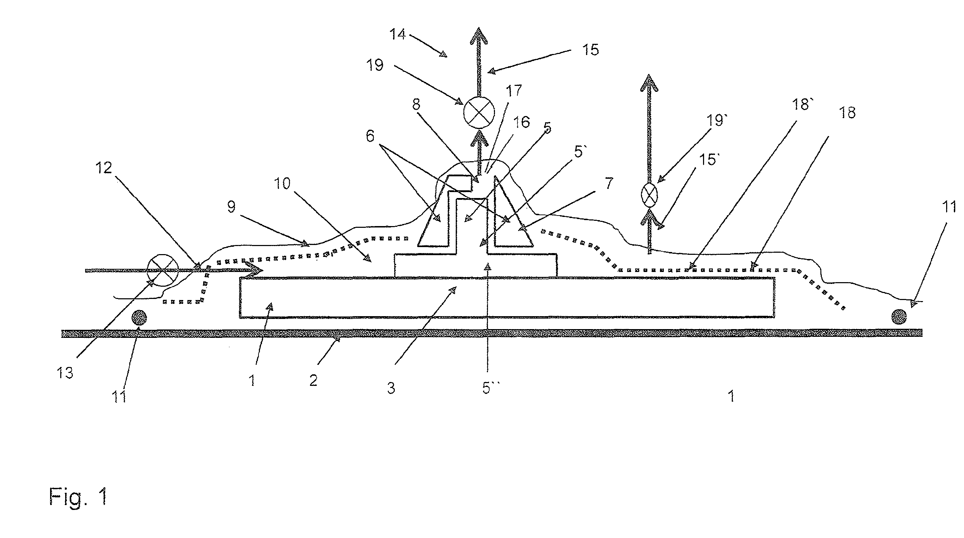

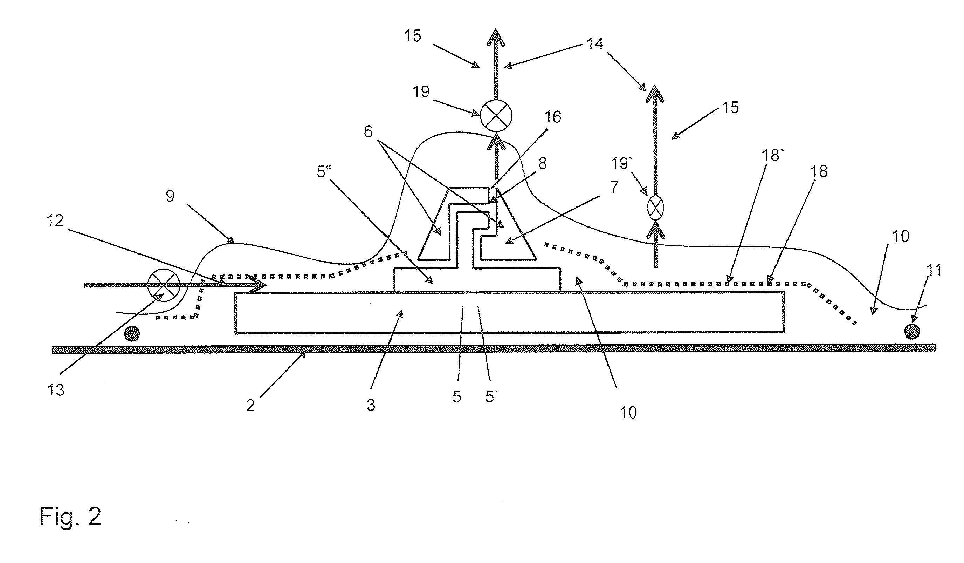

In Fig. 1 und Fig. 2 ist jeweils ein Aufbau zur Herstellung eines Faserverbundbauteils 1 im Infusionsverfahren dargestellt, wobei auf einer Tragform 2, die lediglich schematisch dargestellt ist, ein flächiges Fasergelege 3 insbesondere aus Kohlenstofffasern angeordnet wird, welches beispielsweise ein Beplankungsfeld ausbildet. Auf einer von der Tragform 2 abgewandten Seite des Faserverbundbauteils 1 wird zumindest ein Versteifungsprofil 5 angeordnet, das von der Längsebene des Fasergeleges 3 hochsteht. Zu Beginn liegen das Fasergelege 3 und das Versteifungsprofil 5 als trockenes Faser-Halbzeug bzw. als Vorform vor, die zur Ausbildung des Faserverbundbauteils 1 mit Harz durchtränkt wird. Das Versteifungsprofil 5 weist gemäß der in Fig. 1 dargestellten Ausführungsform einen steg- bzw. stringerförmigen Teil 5' und einen auf dem Fasergelege 3 aufliegenden Teil 5'' auf, welche gemeinsam ein T-förmiges Faserverbundbauteil 5 ausbilden.

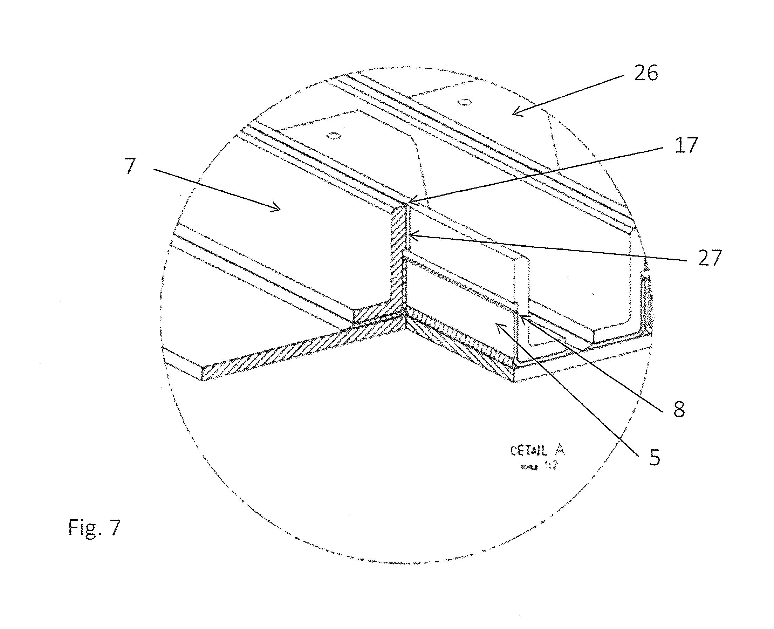

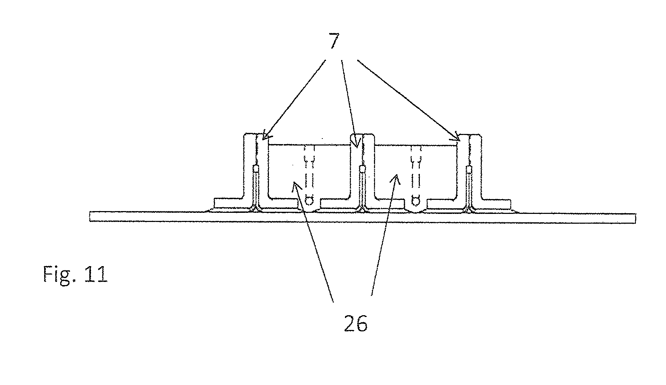

Der steg- bzw. stringerförmige Teil 5' des Versteifungsprofils 5 wird zwischen entsprechenden Werkzeugteilen 6 eines Formwerkzeugs 7 verpresst. Hierfür weist das Formwerkzeug 7 eine dem Versteifungsprofil 5 entsprechende Ausnehmung 8 auf, in welcher das Versteifungsprofil 5 aufgenommen wird (der besseren Übersicht halber ist das Formwerkzeug 7 in den schematischen Fig. 1 bis 3 beabstandet vom Versteifungsprofil 5 eingezeichnet; beim Verpressen liegt das Formwerkzeug 7 jedoch selbstverständlich am Versteifungsprofil an, vgl. Fig. 7 bis 11). Beim gezeigten Ausführungsbeispiel sind als Werkzeugteile 6 keilförmige Blöcke vorgesehen, welche jedoch selbstverständlich auch eine andere Gestalt aufweisen können. Zur Herstellung des Faserverbundbauteils 1 im Infusionsverfahren wird mittels zumindest einer das Fasergelege 3 und das Versteifungsprofil 5 umschließenden luftdichten Folie 9 (auch mit Vakuumsack bezeichnet) ein zur Tragform 2 hin abgedichteter Raum 10 gebildet. Hierfür sind an gegenüberliegenden Seiten der Werkzeuganordnung (schematisch dargestellte) Dichtungen 11 vorgesehen. Der Raum 10 wird mit zumindest einer (mit einem Pfeil schematisch dargestellten) Harz-Zuleitung 12 verbunden, welche ein (Absperr-)Ventil 13 aufweisen kann. Die Harz-Zuleitung 12 ist mit einem (nicht dargestellten) Harzvorratsbehälter verbunden. Der Aufbau weist zudem eine Vakuumeinrichtung 14 auf, die zumindest eine aus dem Raum 10 führende Vakuumleitung 15 aufweist, die mit einer entsprechenden (nicht gezeigten) Vakuummaschine zum Erzeugen eines Unterdrucks verbunden wird. Durch Anlegen eines Unterdrucks wird Harz durch die Harz-Zuleitung 12 in den Raum 10 angesaugt. Das angesaugte Harz wird durch das Fasergelege 3 bzw. durch das Versteifungsprofil 5 gesaugt, um das Fasergelege 3 bzw. das Versteifungsprofil 5 zur Ausbildung des Faserverbundbauteils 1 mit Harz zu durchtränken.

Bei bekannten Verfahren dieser Art hat es sich als schwierig herausgestellt, die Durchtränkung der Vorform mit Matrixmaterial von der Luftabsaugung zu trennen. Hierfür wurde zumeist eine sich zumindest einseitig um die Werkzeuganordnung herum erstreckende semipermeable, d.h. luftdurchlässige aber für Matrixmaterial undurchlässige, Folie verwendet, um einen mit der Harzzufuhr verbundenen Infusionsraum von einem mit der Vakuumleitung verbundenen Entlüftungsraum zu trennen. Dies hat sich jedoch insbesondere bei großflächigen Strukturen, welche mit komplizierten Versteifungselementen versehen werden, als aufwendig und fehleranfällig erwiesen.

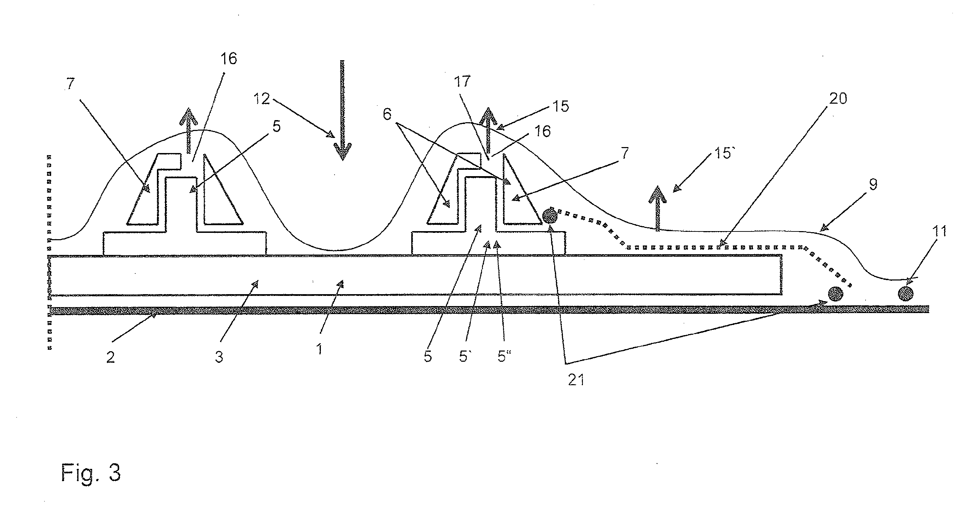

Demgegenüber wird bei der gezeigten Ausführung Luft und Harz zwischen den Werkzeugteilen 6 des Formwerkzeugs 7 durch das Versteifungsprofil 5 in einen im Formwerkzeug 7 ausgebildeten Absaugkanal 16 (vgl. Fig. 3 und Fig. 7) gesaugt, welcher an der von der Tragform 2 abgewandten Seite des Versteifungsprofils 5 an die Ausnehmung 8 zwischen den Werkzeugteilen 6 des Formwerkzeugs 5 anschließt. Der Absaugkanal 16 ist über eine an der Oberseite des Formwerkzeugs 7 ausgebildete Absaugöffnung 17 in luft- und harzleitender Verbindung mit der Vakuumleitung 15. Aus Fig. 2 ist zudem eine weitere Vakuumleitung 15' ersichtlich, welche zur Unterstützung der Vakuumleitung 15 in einem Randbereich des Fasergeleges 3 angeordnet wird. Die Vakuumleitung 15' kann mit der an den Absaugkanal 16 im Formwerkzeug 7 anschließenden Vakuumleitung 15 in einer gemeinsamen Hauptleitung (nicht dargestellt) zusammengeführt werden, wobei die Hauptleitung mit einer gemeinsamen Vakuummaschine (nicht dargestellt) verbunden wird.

Wie aus Fig. 1 und Fig. 2 weiters ersichtlich, ist in einem vom Formwerkzeug 5 freien Bereich ein Membran- bzw. Gewebeaufbau 18 vorgesehen, der zumindest eine Fließhilfe bzw. Verteilermembran 18' aufweist, die beispielsweise mit einem Klebeband fixiert werden kann. Zudem kann unterhalb der Verteilermembran 18' ein Abreißgewebe ("Peel-Ply") vorgesehen sein, welches unmittelbar auf die Bauteiloberfläche aufgebracht wird. Die Verteilermembran 18' dient dazu, das angesaugte Harz auf der Bauteiloberfläche zu verteilen. Das Abreißgewebe erleichtert das Abziehen der mit Matrixmaterial durchtränkten Verteilermembran 18' nach Fertigstellung des Faserverbundbauteils 1. Bei der gezeigten Ausführungsform ist es jedoch nicht erforderlich, dass eine semipermeable Membran über den gesamten Aufbau gestülpt wird, um einen Infusionsraum von einem Lüftungsraum abzutrennen.

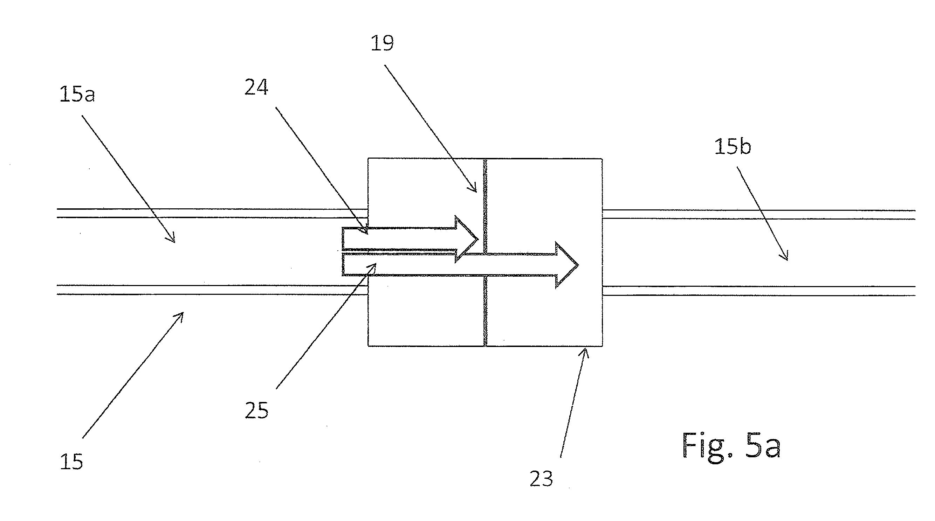

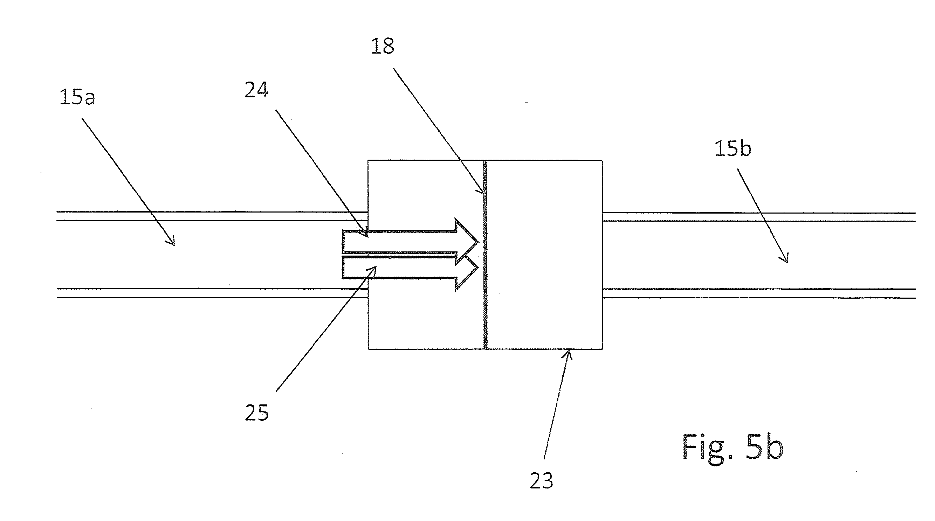

Wie aus Fig. 1 und Fig. 2 weiters schematisch ersichtlich, ist in den Vakuumleitungen 15, 15' jeweils ein Membranfilter 19 bzw. 19' angeordnet, welches jeweils dazu eingerichtet ist, bei einer Durchtränkung mit Harz in einen im Wesentlichen luftdichten Zustand überzugehen. Die Anordnung der Membranfilter 19, 19', deren Funktion im Zusammenhang mit Fig. 5a, 5b näher beschrieben wird, ermöglicht eine vorteilhafte Selbstregulierung des Infusionsverfahrens, indem die Luftabsaugung über die Vakuumleitungen 15, 15' gestoppt wird, sobald das aus dem Absaugkanal 16 abgeleitete Harz über die Vakuumleitung 15, 15' zum jeweiligen Membranfilter 19, 19' gelangt.

Aus Fig. 2 ist eine alternative Ausführung des Versteifungsprofils 5 ersichtlich, welches einen L-förmigen Teil 5' aufweist, der an einen stufenförmig vom flächigen Fasergelege 3 abgesetzten Teil 5'' anschließt, so dass ein LZ-Profil erhalten wird. Die Ausnehmung 8 zwischen den Werkzeugteilen 6 ist entsprechend L-förmig ausgebildet.

Aus Fig. 3 ist insbesondere der Randbereich des Aufbaus ersichtlich. Demnach ist im Randbereich des Faserverbundbauteils 1 eine semipermeable, d.h. luftdurchlässige und harzundurchlässige, Membran 20 angeordnet, welche mittels Dichtungen 21 gegenüber dem Formwerkzeug 7 bzw. der Tragform 2 abgedichtet ist. Hierdurch wird ein vorzeitiger Harzeintritt in die Vakuumleitung 15' verhindert. Die übrigen Abschnitte des Faserverbundbauteils 1, speziell im Bereich der Versteifungsprofile 5 und in Bereichen zwischen benachbarten Versteifungsprofilen 5, können jedoch von einer derartigen semipermeablen Membran frei bleiben; in diesen Bereichen wird ein vorzeitiger Harzeintritt in die Vakuumleitung 15 durch die vorstehend erläuterte Anordnung des Absaugkanals 16 im Formwerkzeug 7 verhindert.

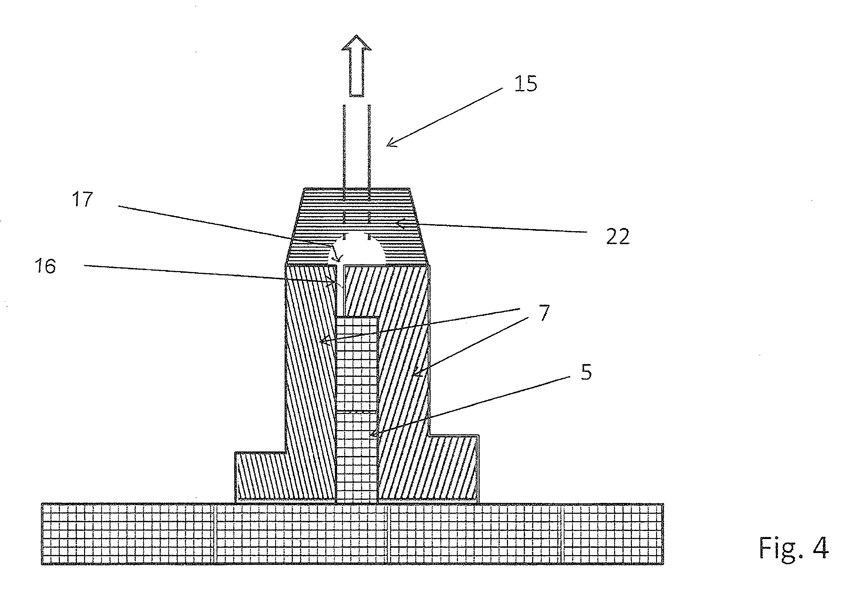

Fig. 4 zeigt eine Schnittansicht des Aufbaus im Bereich des Formwerkzeugs 7, wobei der an die Ausnehmung 8 oberhalb des Versteifungsprofils 5 anschließende Absaugkanal 16 ersichtlich ist, der über die Absaugöffnung 17 mit einem Anschlussteil 22 (beispielsweise einem Silikonprofil) in Verbindung steht. Das Anschlussteil 22 erstreckt sich vorzugsweise über die gesamte Länge des Versteifungsprofils 5. Vorzugsweise weist jedes Versteifungsprofil 5 ein eigenes Anschlussteil 22 zum Anschluss an die Vakuumeinrichtung 14 auf. Das Anschlussteil 22 ist, wie aus Fig. 4 schematisch ersichtlich, mit der Vakuumleitung 15 verbunden, welche das Membranfilter 19 aufweist. Das Anschlussteil 22 kann in Längsrichtung beabstandete Trennwände (nicht gezeigt) aufweisen, welche den Innenraum des Anschlussteils 22 in einzelne Kammern unterteilen, die vorzugsweise jeweils mit einem Absaugkanal 16 des Formwerkzeugs 7 verbunden sind. Nach dem Durchtritt durch das Versteifungsprofil 5 strömen Luft und Harz über den Absaugkanal 16 in das Anschlussteil 22 und von dort in die Vakuumleitung 15. Wenn das Harz über die Vakuumleitung 15 zum Membranfilter 19 gelangt, wird das Membranfilter in den luftdichten Zustand überführt, so dass die Luftabsaugung unterbrochen ist. Der Druckabfall an der Vakuumleitung 15 kann mit (nicht gezeigten) Detektionsmitteln erfasst werden, um das Ende des Infusionsvorgangs festzustellen. Dies birgt insbesondere dann Vorteile, wenn eine direkte Beobachtung des Herstellungsverfahrens nicht möglich ist, was insbesondere dann der Fall ist, wenn das Verfahren in einem Ofen unter Wärmezufuhr durchgeführt wird.

Aus den Fig. 5a und Fig. 5b ist schematisch die Funktion des Membranfilters 19 ersichtlich; das Membranfilter 19' ist entsprechend ausgebildet. Demnach weist die Vakuumleitung 15 einen mit dem Raum 10, speziell mit dem darin angeordneten Anschlussteil 22, verbundenen Abschnitt 15a auf, welcher über einen Verbindungsteil 23 mit einem Abschnitt 15b verbunden ist, der an die Vakuummaschine angeschlossen ist. Das Membranfilter 19 ist im Verbindungsteil 23 angeordnet. Im offenen Zustand, welcher in Fig. 5a dargestellt ist, ist das Membranfilter 19 für einen mit einem Pfeil 24 veranschaulichten Harzfluss und für einen mit einem Pfeil 25 veranschaulichten Luftstrom durchlässig. Hierfür kann das Membranfilter 19 feine Poren aufweisen, welche in der Herstellung des Membranfilters 19, 19' beispielsweise durch Überdehnung einer dünnen Silikon-Haut erzeugt werden. Bei Benetzung mit Harz bleibt das Membranfilter 19, 19' noch solange luftdurchlässig, bis das Membranfilter 19, 19' vollständig durchnässt ist, wodurch die Luftdurchlässigkeit verloren geht. Somit bewirkt das Membranfilter 19, 19' zunächst eine Drosselwirkung, wenn die Poren im Kontakt mit Harz nach und nach verschlossen werden, bevor das Membranfilter 19, 19' im luftundurchlässigen Zustand die Funktion einer Matrixsperre analog einem sich selbst regelenden Ventil übernimmt. In dem in Fig. 5b dargestellten luftdichten Zustand wird somit sowohl ein Harzdurchtritt (Pfeil 24) als auch ein Luftdurchtritt (Pfeil 25) in den Abschnitt 15b der Vakuumleitung 15 verhindert.

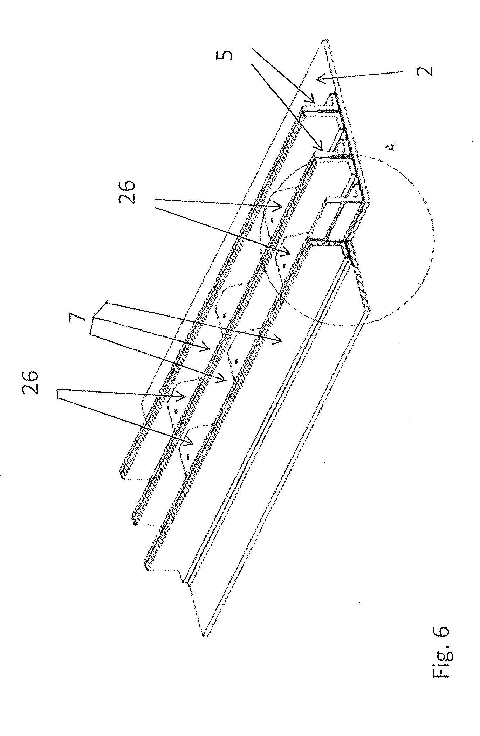

In den Fig. 6 bis Fig. 11 sind verschiedene Ansichten der Werkzeuganordnung zur Verwendung im vorstehend beschriebenen Infusionsverfahren gezeigt.

Wie aus Fig. 6 ersichtlich, sind zum Verpressen einer Mehrzahl von Versteifungsprofilen 5 (Fig. 6 zeigt beispielsweise drei Versteifungsprofile 5) eine entsprechende Anzahl von Formwerkzeugen 7 vorgesehen, welche auf der Tragform 2 angeordnet werden. Zwischen den Formwerkzeugen 7 sind Distanzblöcke 26 angeordnet, welche die Formwerkzeuge 7 in der bestimmungsgemäßen Position fixieren. Die Formwerkzeuge 7 weisen zudem Stellmittel, z.B. Schrauben oder Klemmen, auf, um das darin aufgenommene Versteifungsprofil 5 auf das gewünschte Nominalmaß zu verpressen.

Wie aus der Detailansicht gemäß Fig. 7 ersichtlich, ist der Absaugkanal 16 als integrale Aussparung des Formwerkzeugs 7 ausgebildet. Beim gezeigten Ausführungsbeispiel verläuft der Absaugkanal 16 im Wesentlichen senkrecht zur Längsebene des Fasergeleges 3. Der Absaugkanal 16 schließt über eine Eintrittsöffnung 27 an den oberhalb des Versteifungsprofils 5 zur zugewandten Innenseite des Formwerkzeugs 7 hin freibleibenden Bereich der Ausnehmung 8 an; somit wird oberhalb des Profilstegs des Versteifungsprofils 5 ein in Längsrichtung verlaufender Kanal ausgebildet. Der Absaugkanal 16 kann beispielsweise eine kreisförmige, ovale oder rechteckige Querschnittsgeometrie aufweisen.

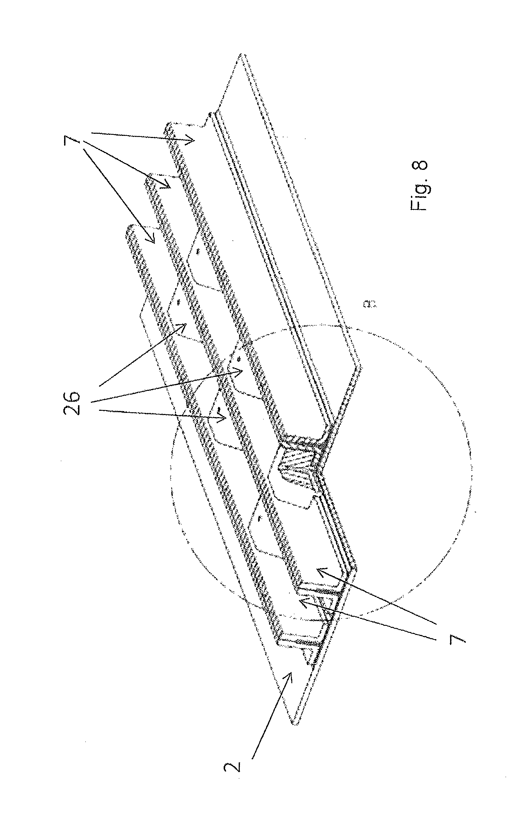

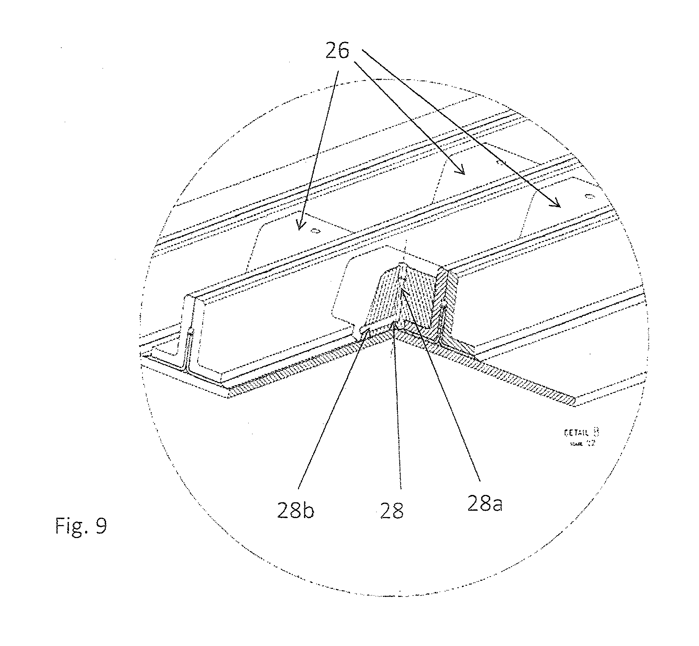

In den Fig. 8 und 9 ist die Werkzeuganordnung jeweils mit einem Schnitt im Bereich des Distanzblocks 26 gezeigt. Demnach weist der Distanzblock 26 einen zentralen Harzzufuhrkanal 28 auf, der mit der Harz-Zuleitung 12 verbunden wird. Der Harzzufuhrkanal 28 weist einen im Wesentlichen senkrecht zur Längsebene des Fasergeleges 3 verlaufenden Abschnitt 28a, der an die Harz-Zuleitung 12 angeschlossen wird, und einen im Wesentlichen parallel zur Längsebene des Fasergeleges 3 verlaufenden Abschnitt 28b auf, der im Bereich des Fasergeleges 3 in den Raum 10 mündet. Demach kann das Harz vorteilhafterweise im Wesentlichen tangential zur Längsebene des Fasergeleges 3 eingeleitet werden.

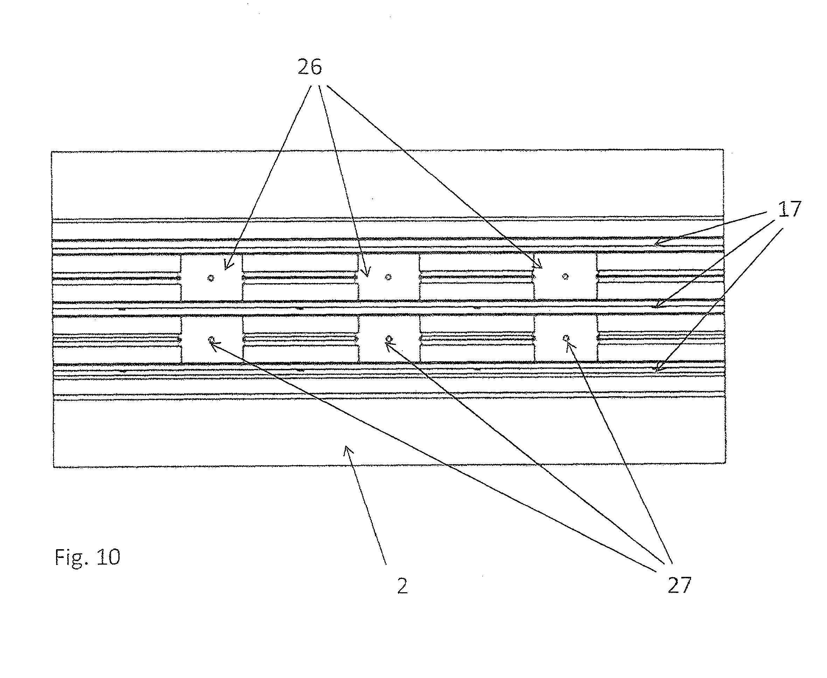

Wie aus der Draufsicht gemäß Fig. 10 ersichtlich, erfolgt die Luftabsaugung über mehrere in Längsrichtung des Formwerkzeugs 7 beabstandete Absaugöffnungen 17, welche jeweils in das (in Fig. 10 nicht gezeigte) Anschlussteil 22 münden, an das zumindest eine Vakuumleitung 15 angeschlossen wird. Die Harzzufuhr erfolgt, wie erwähnt, an mehreren Distanzblöcken 26, die in bestimmten Abständen über die Länge der Formwerkzeuge 7 verteilt sind.

Das vorstehend beschriebene Verfahren unter Verwendung der hierfür eingerichteten Werkzeuganordnung kann mit verschiedenen Matrixmaterialien bzw. Harzen verwendet werden, welche sich insbesondere durch ihre Viskositäten und ihre Temperaturparameter unterscheiden. Hierfür sind einerseits bei Raumtemperatur aushärtende Matrixmaterialien oder alternativ Heißhärter geeignet, welche jeweils in verschiedenen Ausführungen erhältlich sind. Im Fall von Raumtemperatur-Harzen erfolgt die Infusion und die anschließende Aushärtung bei Raumtemperatur. Für die Heißhärter liegen die typischen Infusionstemperaturen zwischen z.B. 80° C bis 120° C und die Aushärtetemperaturen im Bereich von ca. 180° C. Ein zweckmäßiger Vakuumdruck für alle Temperaturbereiche liegt bei ca. 20 mbar, wobei als Toleranz für die Qualität des Vakuums ein Druckabfall beim Abschalten der Vakuummaschine in der Höhe von ca. 20 mbar pro 10 min vorgegeben wird. Zu Beginn des Prozesses kann der gesamte Aufbau einem Vakuumtest unterzogen werden. Beim Anlegen des Vakuums wird die Drosselfunktion der Membranfilter 19, 19' beobachtet, welche bewirkt, dass sich das Gleichgewicht zwischen dem Vakuumdruck vor und nach dem Membranfilter 19, 19' erst nach einer gewissen Zeit einstellt. Anschließend kann mit dem Vakuumtest begonnen werden, welcher die oben angeführten Toleranzen erfüllen sollte.

Im Fall eines Heißhärter-Harzes wird die Werkzeuganordnung gemeinsam mit der darin angeordneten Vorform des Faserverbundbauteils 1 auf eine Infusionstemperatur von z.B. 100° C erhitzt. Hierfür wird der gesamte Aufbau in einem Ofen platziert. Das zur Infusion bereitgestellte Harz wird hiervon gesondert auf Infusionstemperatur gebracht. Vorteilhafterweise liegt die Temperatur des Harzes etwas unterhalb der Temperatur der Werkzeuganordnung, um ein verbessertes Fließverhalten zu erzielen. Nach dem Erreichen der notwendigen Sollparameter (Temperatur, Vakuumdruck) beginnt der Infusionsprozess.

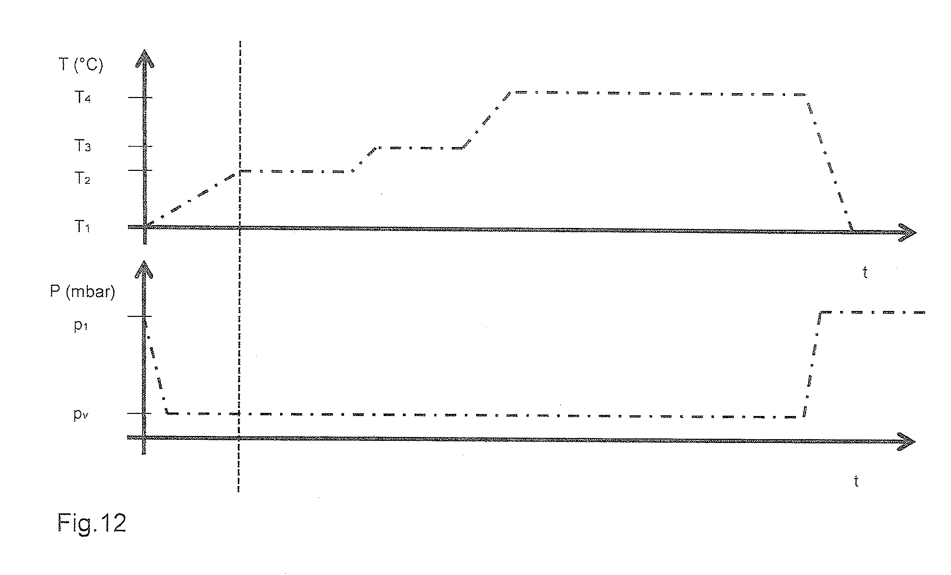

In Fig. 12 ist ein typischer Temperatur- (oben) bzw. Druckverlauf (unten) während des Infusionsprozesses bei Verwendung eines Heißhärter-Harzes dargestellt. Darin bezeichnet T1 die Raumtemperatur, T2 die Infusionstemperatur, T3 eine optionale Haltestufe und T4 die Aushärtetemperatur. Im entsprechenden Druckdiagramm bezeichnet p1 den Umgebungsdruck und pv den Infusionsdruck. Der Vakuum wird dabei mindestens bis zum Ablauf der Zeit der Aushärtetemperatur T4 angeschaltet, wenn die Matrix an Viskosität verliert und die chemische Aushärtung beginnt.

## Patentansprüche

1. Verfahren zur Herstellung eines Faserverbundbauteils (1), wobei auf einer Tragform (2) ein flächiges Fasergelege (3) angeordnet wird, welches auf einer von der Tragform (2) abgewandten Seite mit zumindest einem von der Längsebene des Fasergeleges (3) abstehenden Versteifungsprofil (5) versehen wird, das zwischen entsprechenden Werkzeugteilen (6) eines Formwerkzeugs (7) verpresst wird, wobei mittels einer das Formwerkzeug (7) und das Fasergelege (3) bzw. das zumindest eine Versteifungsprofil (5) umschließenden luftdichten Folie (9) ein zur Tragform (2) abgedichteter Raum (10) gebildet wird, der mit zumindest einer Harz-Zuleitung (12) und zumindest einer Vakuumleitung (15) verbunden wird, wobei durch Anlegen eines Unterdrucks an der Vakuumleitung (15) Harz angesaugt wird, welches das Fasergelege (3) bzw. das Versteifungsprofil (5) zur Ausbildung des Faserverbundbauteils (1) durchtränkt, wobei Luft und Harz zwischen den Werkzeugteilen (6) des Formwerkzeugs (7) durch das zumindest eine Versteifungsprofil (5) in einen im Formwerkzeug (7) verlaufenden Absaugkanal (16) gesaugt werden, der über eine Absaugöffnung (17) des Formwerkzeugs (7) in luft- bzw. harzleitender Verbindung mit der zumindest einen Vakuumleitung (15) steht, **dadurch gekennzeichnet, dass** die Vakuumleitung (15) ein im trockenen Zustand luftdurchlässiges und harzundurchlässiges Membranfilter (19) aufweist, welches dazu eingerichtet ist, bei einer Durchtränkung mit Harz in einen im Wesentlichen luftdichten Zustand überzugehen.

2. Verfahren nach Anspruch 1, **dadurch gekennzeichnet, dass** das Formwerkzeug (7) im Bereich des zumindest einen Versteifungsprofils (5) einen von einem Membran- bzw. Folienaufbau, insbesondere einer semipermeablen Membran, freien Abschnitt aufweist.

3. Verfahren nach Anspruch 1 oder 2, **dadurch gekennzeichnet, dass** die Absaugung von Harz und Luft über die Absaugöffnung (17) an der von der Tragform (2) abgewandten Oberseite des Formwerkzeugs (7) erfolgt.

4. Verfahren nach einem der Ansprüche 1 bis 3, **dadurch gekennzeichnet, dass** im Absaugkanal (16) Luft und Harz zumindest abschnittsweise im Wesentlichen senkrecht zur Längsebene des Fasergeleges (3) abgesaugt werden.

5. Verfahren nach einem der Ansprüche 1 bis 4, **dadurch gekennzeichnet, dass** zumindest eine weitere Vakuumleitung (15'), insbesondere in einem Randbereich des Fasergeleges (3), angeordnet wird.

6. Verfahren nach Anspruch 5, **dadurch gekennzeichnet, dass** die zumindest eine im Randbereich des Fasergeleges (3) angeordnete weitere Vakuumleitung (15') mit der an den Absaugkanal (16) im Formwerkzeug (7) anschließenden Vakuumleitung (15) in einer gemeinsamen Hauptleitung zusammengeführt wird.

7. Verfahren nach einem der Ansprüche 1 bis 6, **dadurch gekennzeichnet, dass** in einem vom Formwerkzeug (7) freien Bereich, insbesondere in einem Randbereich des Faserverbundbauteils (1), ein Membran- bzw. Gewebeaufbau (18) angeordnet wird, der eine Verteilermembran (18') und/oder ein Abreißgewebe aufweist.

8. Verfahren nach Anspruch 7, **dadurch gekennzeichnet, dass** die Verteilermembran (18') im Randbereich des Fasergeleges (3) gegenüber der Tragform (2) abgedichtet wird.

9. Verfahren nach einem der Ansprüche 1 bis 8, **dadurch gekennzeichnet, dass** das Ansaugen von Harz in einem Ofen unter Wärmezufuhr durchgeführt wird.

10. Verfahren nach einem der Ansprüche 1 bis 9, **dadurch gekennzeichnet, dass** das Formwerkzeug (7) im geschlossenen Zustand eine im Querschnitt im Wesentlichen rechteckige Ausnehmung (8) zum Verpressen eines stegförmigen Teils (5') des Versteifungsprofils (5) aufweist.

11. Verfahren nach einem der Ansprüche 1 bis 10, **dadurch gekennzeichnet, dass** das Formwerkzeug (7) im geschlossenen Zustand eine im Querschnitt im Wesentlichen L-förmige Ausnehmung (8) zum Verpressen eines entsprechend geformten Teils (5') des Versteifungsprofils (5) aufweist.

12. Verfahren nach einem der Ansprüche 1 bis 11, **dadurch gekennzeichnet, dass** zumindest zwei Formwerkzeuge (7) zum Verpressen jeweils eines Versteifungsprofils (5) vorgesehen sind, zwischen denen zumindest ein Distanzblock (26) angeordnet ist, der einen mit der Harz-Zuleitung (12) verbindbaren Harzzufuhrkanal (28) aufweist.

13. Verfahren nach Anspruch 12, **dadurch gekennzeichnet, dass** der Harzzufuhrkanal (28) des Distanzblocks (26) einen im Wesentlichen senkrecht zur Längsebene des Fasergeleges (3) verlaufenden Abschnitt, der mit der Harz-Zuleitung (12) verbindbar ist, und einen im Wesentlichen parallel zur Längsebene des Fasergeleges (3) verlaufenden Abschnitt (28b) zum Einleiten von Harz aufweist.

## Claims

1. A method for producing a fibre composite component (1), wherein a planar fibre lay-up (3) is arranged on a carrier mould (2), which fibre lay-up, on a side that faces away from the carrier mould (2), is provided with at least one stiffening section (5) that protrudes from the longitudinal plane of the fibre lay-up (3) and is pressed between corresponding tool parts (6) of a moulding tool (7), wherein a chamber (10) sealed with regard to the carrier mould (2) is formed by an air-tight film (9) that encloses the moulding tool (7) and the fibre lay-up (3) and the at least one stiffening section (5), respectively, which chamber (10) is connected to at least one resin supply line (12) and to at least one vacuum line (15), resin being aspirated by applying a negative pressure to the vacuum line (15), which resin impregnates the fibre lay-up (3) and the stiffening section (5) so as to form the fibre composite component (1), air and resin being aspirated between the tool parts (6) of the moulding tool (7) through the at least one stiffening section (5) into a suction channel (16) extending in the moulding tool (7), which suction channel is connected to the at least one vacuum line (15) via a suction opening (17) of the moulding tool (7) in an air- and resin-conducting manner, respectively, **characterised in that** the vacuum line (15) comprises a membrane filter (19) which, in its dry state, is air-permeable and resin-impermeable, which is adapted to change over into a substantially air-tight state when impregnated with resin.

2. The method according to claim 1, **characterised in that** in the region of the at least one stiffening section (5), the moulding tool (7) has a portion free from a membrane or film structure, in particular from a semi-permeable membrane.

3. The method according to claim 1 or 2, **characterised in that** resin and air are sucked off via the suction opening (17) at the upper side of the moulding tool (7) that faces away from the carrier mould (2).

4. The method according to any one of claims 1 to 3, **characterised in that** within the suction channel (16), at least in portions thereof, air and resin are sucked off substantially perpendicular to the longitudinal plane of the fibre lay-up (3).

5. The method according to any one of claims 1 to 4, **characterised in that** at least one further vacuum line (15'), in particular in a rim region of the fibre lay-up (3), is arranged.

6. The method according to claim 5, **characterised in that** the at least one further vacuum line (15') arranged in the rim region of the fibre lay-up (3) is united in a common main line with the vacuum line (15) following upon the suction channel (16) in the moulding tool (7).

7. The method according to any one of claims 1 to 6, **characterised in that** in a region free from the moulding tool (7), in particular in a rim region of the fibre composite component (1), a membrane or a tissue structure (18), respectively, is arranged which has a distributing membrane (18') and/or a peel-ply.

8. The method according to claim 7, **characterised in that** in the rim region of the fibre lay-up (3), the distributing membrane (18') is sealed relative to the carrier mould (2).

9. The method according to any one of claims 1 to 8, **characterised in that** the aspiration of resin is carried out in a furnace under supply of heat.

10. The method according to any one of claims 1 to 9, **characterised in that** the moulding tool (7) has a recess (8) of substantially rectangular cross-section in its closed state for pressing a web-shaped part (5') of the stiffening section (5).

11. The method according to any one of claims 1 to 10, **characterised in that** the moulding tool (7) has a recess (8) of substantially L-shaped cross-section in its closed state for pressing a correspondingly shaped part (5') of the stiffening section (5) .

12. The method according to any one of claims 1 to 11, **characterised in that** at least two moulding tools (7) are provided for pressing one stiffening section (5) each, between which at least one spacer block (26) is arranged which comprises a resin supply channel (28) connectable to the resin supply line (12).

13. The method according to claim 12, **characterised in that** the resin supply channel (28) of the spacer block (26) comprises a portion extending substantially perpendicular to the longitudinal plane of the fibre lay-up (3) and connectable to the resin supply-line (12), and a portion (28b) extending substantially in parallel to the longitudinal plane of the fibre-lay-up (3) for introducing resin.

## Revendications

1. Procédé pour la réalisation d'une pièce composite renforcée par des fibres (1), une nappe de fibres (3) plane étant disposée sur une forme de support (2) et étant munie, sur un côté opposé à la forme de support (2), d'au moins un profil de renfort (5), qui est en saillie sur le plan longitudinal de la nappe de fibres (3) et qui est pressé entre des parties (6) correspondantes d'un outil de formage (7), l'outil de formage (7) et la nappe de fibres (3) ainsi que ledit au moins un profil de renfort (5) étant entourés d'une feuille (9) étanche à l'air formant un espace (10), rendu étanche par rapport à la forme de support et relié à au moins une conduite d'apport de résine (12) et à au moins une conduite sous vide (15), la résine étant aspirée sous l'effet de l'application d'une dépression dans la conduite sous vide (15) et imprégnant la nappe de fibres (3) et le profil de renfort (5) en vue de réaliser la pièce composite renforcée par des fibres (1), l'air et la résine étant aspirés entre les parties (6) de l'outil de formage (7) à travers ledit au moins un profil de renfort (5) dans un canal d'aspiration (16), qui s'étend dans l'outil de formage (7) et qui est en liaison pour canaliser l'air ou la résine avec ladite au moins une conduite sous vide (15) par l'intermédiaire d'une ouverture d'aspiration (17) de l'outil de formage (7), **caractérisé en ce que** la conduite sous vide (15) comporte un filtre à membrane (19) qui, à l'état sec, est perméable à l'air et imperméable à la résine et qui est configuré pour passer à un état sensiblement étanche à l'air lorsqu'il est imbibé par la résine.

2. Procédé selon la revendication 1, **caractérisé en ce que** l'outil de formage (7), dans la zone dudit au moins un profil de renfort (5), comporte une partie sans structure à membrane ou à feuille, en particulier sans membrane semi-perméable.

3. Procédé selon la revendication 1 ou 2, **caractérisé en ce que** la résine et l'air sont aspirés par l'intermédiaire de l'ouverture d'aspiration (17) au niveau du côté supérieur de l'outil de formage (7), opposé à la forme de support (2).

4. Procédé selon l'une quelconque des revendications 1 à 3, **caractérisé en ce que** l'air et la résine sont aspirés dans le canal d'aspiration (16) au moins par zones, sensiblement perpendiculairement au plan longitudinal de la nappe de fibres (3).

5. Procédé selon l'une quelconque des revendications 1 à 4, **caractérisé en ce qu'**au moins une conduite sous vide (15') supplémentaire est disposée en particulier dans une zone bordure de la nappe de fibres (3).

6. Procédé selon la revendication 5, **caractérisé en ce que** ladite au moins une conduite sous vide (15') supplémentaire, disposée dans la zone bordure de la nappe de fibres (3), et la conduite sous vide (15), se raccordant au canal d'aspiration (16) dans l'outil de formage (7), se réunissent pour former une conduite principale commune

7. Procédé selon l'une quelconque des revendications 1 à 6, **caractérisé en ce que** dans une zone libre de l'outil de formage (7), en particulier dans une zone bordure de la pièce composite renforcée par des fibres (1), est disposée une structure à membrane ou structure textile (18) qui comporte une membrane de distribution (18') et/ou un tissu d'arrachage.

8. Procédé selon la revendication 7, **caractérisé en ce que** la membrane de distribution (18') est rendue étanche par rapport à la forme de support (2) dans la zone bordure de la nappe de fibres (3).

9. Procédé selon l'une quelconque des revendications 1 à 8, **caractérisé en ce que** l'aspiration de la résine est effectuée dans un four moyennant un apport de chaleur.

10. Procédé selon l'une quelconque des revendications 1 à 9, **caractérisé en ce que** l'outil de formage (7), à l'état fermé, comporte un évidement (8) sensiblement rectangulaire en section transversale, destiné à comprimer une partie (5') en forme de tige du profil de renfort (5).

11. Procédé selon l'une quelconque des revendications 1 à 10, **caractérisé en ce que** l'outil de formage (7), à l'état fermé, comporte un évidement (8) sensiblement en forme de L en section transversale, destiné à comprimer une partie (5') de forme correspondante du profil de renfort (5).

12. Procédé selon l'une quelconque des revendications 1 à 11, **caractérisé en ce que**, pour comprimer dans chaque cas un profil de renfort (5), il est prévu au moins deux outils de formage (7), entre lesquels est disposé au moins un écarteur (26) comportant un canal d'apport de résine (28) pouvant être relié à la conduite de résine (12).

13. Procédé selon la revendication 12, **caractérisé en ce que** le canal d'apport de résine (28) de l'écarteur (26) comporte un segment, qui est sensiblement perpendiculaire au plan longitudinal de la nappe de fibres (3) et qui peut être relié à la conduite de résine (12), et un segment (28b) sensiblement parallèle au plan longitudinal de la nappe de fibres (3) pour l'injection de la résine.
